Europäisches Patentamt

European Patent Office

Office européen des brevets

(19)

(11) Veröffentlichungsnummer : **0 075 300**
**B1**

(12) **EUROPÄISCHE PATENTSCHRIFT**

(45) Veröffentlichungstag der Patentschrift :
02.01.86

(21) Anmeldenummer : **82108627.9**

(22) Anmeldetag : **18.09.82**

(51) Int. Cl.⁴ : **G 03 D 13/00**, G 03 B 27/58

(54) **Vorrichtung zum Zuführen fotografischer Schichtträger zu einer Entwicklungsmaschine.**

(30) Priorität : **18.09.81 DE 8127303 U**
**18.02.82 DE 3205739**

(43) Veröffentlichungstag der Anmeldung :
**30.03.83 Patentblatt 83/13**

(45) Bekanntmachung des Hinweises auf die Patenterteilung : **02.01.86 Patentblatt 86/01**

(84) Benannte Vertragsstaaten :
**AT BE CH FR GB IT LI LU NL SE**

(56) Entgegenhaltungen :
FR-A- 1 542 041
US-A- 3 308 717
US-A- 4 126 391
US-A- 4 136 946
US-A- 4 191 369

(73) Patentinhaber : **Huss, Heinrich**
**Liebigstrasse 1**
**D-6054 Rodgau 6 (DE)**

(72) Erfinder : **Huss, Heinrich**
**Liebigstrasse 1**
**D-6054 Rodgau 6 (DE)**

(74) Vertreter : **Zinngrebe, Horst, Dr.rer.nat.**
**Patentanwälte Dipl.-Ing. G. Schliebs Dr.rer.nat. Horst**
**Zinngrebe Claudiusweg 17 A**
**D-6100 Darmstadt (DE)**

EP 0 075 300 B1

Jouve, 18, rue St-Denis, 75001 Paris, France

## Beschreibung

Die Erfindung betrifft eine Vorrichtung zum Überführen fotografischer, blattförmiger Schichtträger aus einer Belichtungsbühne in den Einlaufschlitz einer Entwicklungsmaschine mittels eines längs des Einlaufschlitzes bewegbaren Schlittens, wobei eine Vorschubeinrichtung die zusammenhängenden Schichtträger aus der Belichtungsbühne über eine Schneidvorrichtung, in welcher jeder Schichtträger von den zusammenhängenden nachfolgenden Schichtträgern abgeschnitten wird, dem Schlitten zuführt, und wobei sich der Einlaufschlitz quer zur Vorschubrichtung erstreckt und breiter ist als ein Schichtträger.

Entwicklungsmaschinen etwa von der in der DE-AS 2 615 905 beschriebenen Art haben eine zur Verarbeitung von breiten Schichtträger-Bahnen relativ große Arbeitsbreite, damit auch großformatige Schichtträger entwickelt werden können. Ferner haben Entwicklungsmaschinen eine bestimmte maximale Entwicklungsleistung in Form einer zeitlichen Maximalzahl von entwickelbaren Schichttägern, die durch den Zeitbedarf des Entwicklungs- und Wässerungsvorgangs bestimmt ist und sich bei gegebener Bad-Zusammensetzung nicht erhöhen läßt.

In nicht voll automatisierten Fotolabors wird beim Arbeiten mit Schichtträger-Bahnen, die auf Rollen aufgewickelt sind, jeweils eine fertig belichtete Schichtträger-Rolle komplett in die Entwicklungsmaschine bzw. deren Einlauf eingehängt, die dann kontinuierlich in die Entwicklungsmaschine einläuft. Aus der US-PS 4 126 391 ist eine Vorrichtung bekannt, bei der zusätzlich zu den von einer Rolle abgeschnittenen Schichtträgern solche mit einem breiteren Format über einen separaten Einwurfschacht dem Einlaufschlitz der Entwicklungsmaschine zugeführt werden können. Diese Vorrichtung ist darin nachteilig, daß die großformatigen Schichtträger an anderer Stelle belichtet werden müssen und von dort in lichtdichten Kassetten oder dgl. von Hand in den Einfüllschacht eingebracht werden müssen.

Mit der Erfindung soll daher bei der eingangs genannten Vorrichtung die Möglichkeit geschaffen werden, Schichtträger unterschiedlicher Formatbreiten, die auf der gleichen Belichtungsbühne belichtet werden, automatisch in die Entwicklungsmaschine einzugeben, wobei die durch die Breite des Einlaufschlitzes gegebene Verarbeitungskapazität der Entwicklungsmaschine für die Verarbeitung schmalerer Schichtträger optimal ausgenützt werden soll.

Bei einer Vorrichtung zum Überführen fotografischer, blattförmiger Schichtträger aus einer Belichtungsbühne in den Einlaufschlitz einer Entwicklungsmaschine mittels eines längs des Einlaufschlitzes bewegbaren Schlittens, wobei eine Vorschubeinrichtung die zusammenhängenden Schichtträger aus der Belichtungsbühne über eine Schneidvorrichtung, in welcher jeder Schichtträger von den zusammenhängenden nachfolgenden Schichtträgern abgeschnitten wird, dem Schlitten zuführt, und wobei sich der Einlaufschlitz quer zur Vorschubrichtung erstreckt und breiter ist als ein Schichtträger, ist dazu nach der Erfindung vorgesehen, daß die Bewegung des Schlittens in Abhängigkeit von der jeweiligen Breite des Schichtträgers zu einer beliebigen Position vor dem Einlaufschlitz erfolgt. Dadurch ergibt sich nicht nur die gewünschte hinsichtlich der Formatbreiten der Schichtträger flexible Verarbeitungsmöglichkeit, sondern man erhält auch eine insgesamt höhere Anzahl von entwickelten Schichtträgern pro Zeiteinheit, ohne daß die Durchlaufzeit der Schichtträger durch die Entwicklungsmaschine erhöht zu werden braucht.

In zweckmäßiger Weiterbildung der Erfindung ist vorgesehen, daß die Steuerung der Vorrichtung Formatwählschalter aufweist, welche den Schlittenantriebsmotor entsprechend dem betätigten Formatwählschalter steuert. Insbesondere wenn der Abstand des Schlittens von der Belichtungsbühne größer ist als die Länge des Schichtträgers kann es sich als zweckmäßig erweisen, daß die Steuerung das von einem betätigen Formatwählschalter erzeugte Formatsignal zwischenspeichert. Dazu können am Schlitten zweckmäßig Sensoren vorgesehen sein, die der Steuerung das Vorhandensein des Schichtträgers mit dem gewählten Format auf dem Schlitten signalisieren.

Die Steuerung, die zweckmäßig einen Mikroprozessor enthalten kann, kann in bevorzugter Weiterbildung der Erfindung weitere Sensoren zum Anhalten des Schlittens an der durch die Breite des Schichtträgers bestimmten Position vor dem Einlaufschlitz aktivieren, wobei die weiteren Sensoren längs der Bahn des Schlittens mit Abstand angeordnet sind.

Weitere bevorzugte Ausgestaltungen, insbesondere des Schlittens, sind in den Unteransprüchen angegeben.

Die Erfindung wird nachstehend anhand des in der beigefügten Zeichnung dargestellten Ausführungsbeispiels erläutert. Es zeigen:

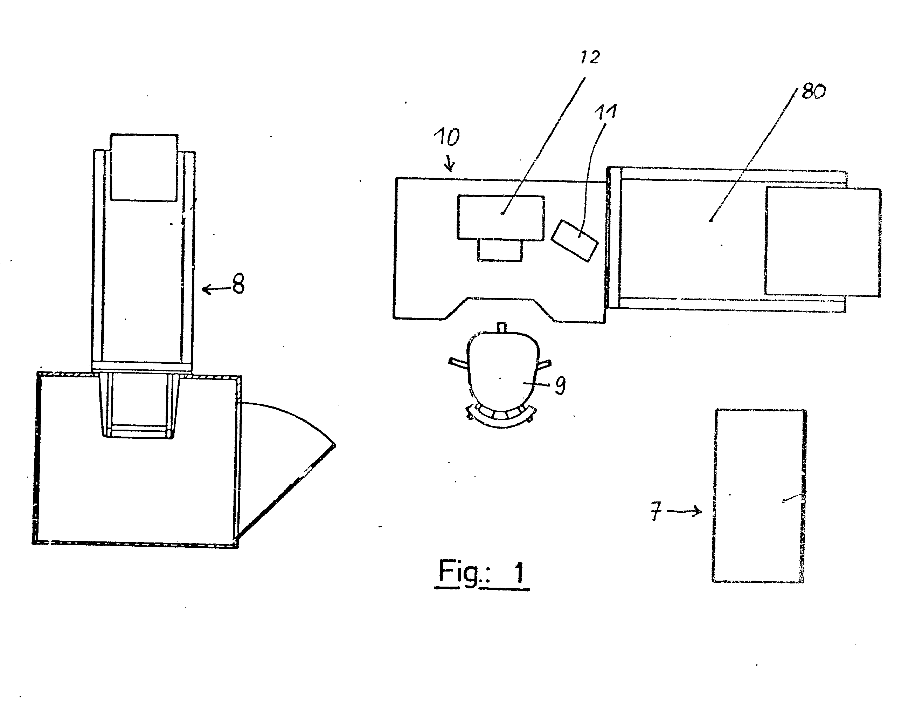

Figur 1 die schematische Darstellung einer Draufsicht auf ein die Erfindung verkörperndes Mini-Fotolabor;

Figur 2 eine schematische Seitenansicht einer aus Schrank und Entwicklungsmaschine kombinierten Baueinheit mit teilweise aufgeschnittenen Seitenwänden;

Figur 3 eine schematische Draufsicht auf die Übergabevorrichtung mit Einlaufschlitz der Entwicklungsmaschine;

Figur 4 eine Schnittansicht eines Teils der Vorrichtung längs der Linie III-III aus Figur 3; und

Figur 5 ein das Betriebsverhalten der Vorrichtung erläuterndes Blockschaltbild;

Figur 6 eine Einzelheit aus dem Schlitten der Übergabevorrichtung.

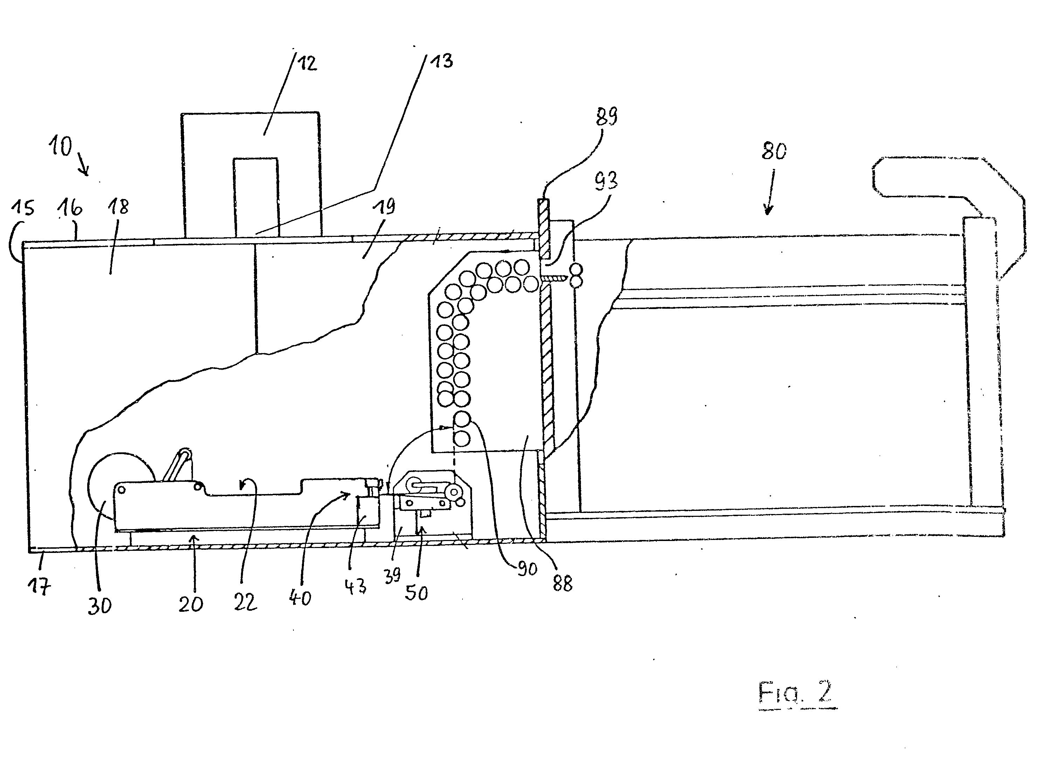

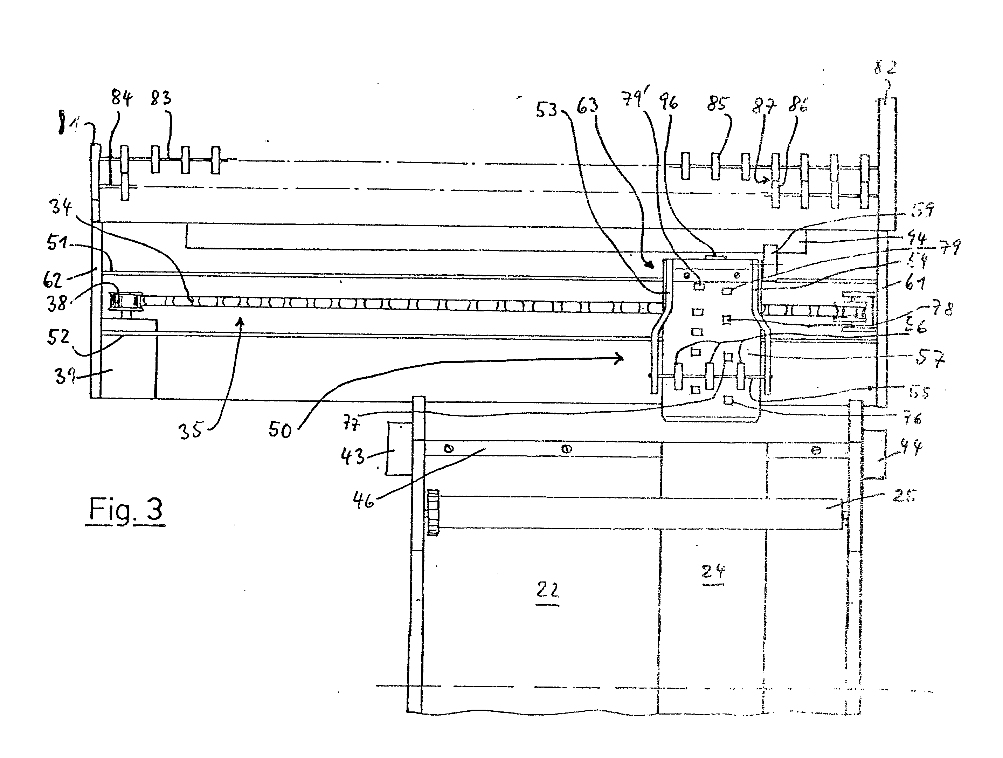

Das Minilabor kann im wesentlichen aus drei Einheiten bestehen, nämlich einer im ganzen mit 8 bezeichneten Filmentwicklungsmaschine, die nicht Gegenstand der Erfindung ist, einem Schrank 10, der vor die Stirnseite einer Entwicklungsmaschine 80 angebaut ist, sowie ggf. einem Verkaufstresen 7. Die die Erfindung verkörpernde Baueinheit aus Schrank 10 und Entwicklungsmaschine 80 hat etwa übliche Tischhöhe, so daß auf der oberen Arbeitsplatte 16 (Figur 2) des Schranks 10 eine nur schematisch angedeutete Belichtungsvorrichtung 12 aufgesetzt sein kann. Der mit einer Seitenwand 15, einer Bodenplatte 17 und zwei vorderen Türen 18 oder 19 gegenüber Umgebungslicht lichtdicht abgeschlossene Schrank 10 enthält in seinem Inneren eine im ganzen mit 20 bezeichnete Belichtungsstation mit einer Vorratsrolle 30 eines fotografischen bandförmigen Schichtträgers, sowie mit einer Belichtungsbühne 22 und einer integral eingebauten Schneidvorrichtung 40. Zwischen der Schneidvorrichtung 40 und einer Einlaufvorrichtung 88, die an der einlaufseitigen Stirnwand 89 der Entwicklungsmaschine 80 befestigt ist und einen Einlaufschlitz 87 (Figur 3) aufweist, ist eine im ganzen mit 50 bezeichnete Übergabevorrichtung für von der Schneidvorrichtung 40 blattförmig beschnittene Schichtträger angeordnet. Nicht dargestellt ist ein lichtdurchlässiger Einsatz in der Arbeitsplatte 16 des Tisches 10 im Belichtungsbereich der Belichtungsvorrichtung 12 sowie ein Abbildungssystem, das von dem auf der Arbeitsplatte 16 durch die Belichtungsvorrichtung 12 belichteten Filmnegativ ein nach Wunsch vergrößertes Bild auf dem in der Belichtungsbühne 22 bereit gehaltenen Schichtträger erzeugt. Der Abstand der Belichtungsbühne 22 von dem lichtdurchlässigen Einsatz in der Arbeitsplatte 16 des Tisches 10 bestimmt sich demzufolge in der üblichen Weise nach optischen Gesetzmäßigkeiten.

Die Belichtungsbühne 22 besitzt übliche Mittel zum Planhalten des bandförmig herangeführten Schichtträgers sowie eine in Figur 3 schematisch mit 25 bezeichnete Schichtträger-Vorschubeinrichtung, die in der konkreten Ausführungsform der Erfindung in Form von Rollen, Bändern oder dgl. den Schichtträger ein- oder beidseitig kontaktierenden Mitteln realisiert sein kann. Das in Figur 3 dargestellte vordere Ende des belichteten Schichtträgers 24 ragt soweit in die Schneidvorrichtung 40 vor, daß die Vorderkante des Schichtträgers 24 mit der Schneidkante 45 einer Schneidleiste 46 abschließt.

Die Schneidvorrichtung 40 weist einen sich quer zwischen den Seitenplatten 21, 23 am Ende der Belichtungsstation 20 erstreckenden Schneidbalken 41 auf, der an seiner unteren Längskante ein Schneidmesser 42 trägt. Der in den Seitenplatten 21, 23 vertikal bewegbare Schneidbalken 41 ist an beiden Enden mit je einem Antrieb, etwa mit dem Anker je eines Elektromagneten 43, 44 verbunden. Das Schneidmesser 42 kooperiert mit einer auf der verlängerten Belichtungsbühne 22 am Ende befestigten Schneidleiste 46 in der Weise, daß es bei Aktivierung des elektromagnetischen Antriebs 43, 44 vor der Schneidkante 45 der Schneidleiste 46 herabfährt und ein Blatt des bereitgehaltenen Schichtträgers 24 abschneidet.

Die Entwicklungsmaschine 80 besitzt eine Einlauf-Stirnwand 89, in welcher unterhalb der Arbeitsplatte 16 eine im wesentlichen die ganze Breite der Entwicklungsmaschine 80 einnehmende Einlauföffnung 93 zur Eingabe von Schichtträgern bis zu einer durch die Einlauföffnung 93 definierten Breite ausgebildet ist. An der schrankseitigen Außenfläche der Einlauf-Stirnwand 89 ist eine Einlaufvorrichtung 88 befestigt, in der auf Wellen 83, 84 (Figur 3) zwei Gruppen von Förderrollen befestigt sind. Jede Förderrolle besteht aus mehreren in gleichmäßigen Abständen auf je einer der Wellen 83, 84 verteilten Schaumstoffscheiben, die auf den Wellen 83, 84 drehfest sitzen. Jede der Wellen 83, 84 überspannt die gesamte Breite der Entwicklungsmaschine 80 und ist in Seitenwänden 81, 82 der Einlaufvorrichtung 88 drehbar gelagert. Die Wellen 83 sind in einem Abstand von den Wellen 84 angeordnet, der gemäß Figur 3 ein leichtes Berühren der gegenüberliegenden Schaumstoffscheiben 85, 86 ermöglicht. Die auf verschiedenen Wellen 83, 84 sitzenden Schaumstoffscheiben 85, 86 können entweder gemäß Figur 3 in Draufsicht fluchten und in Seitenansicht (Figur 2) jeweils zwischen benachbarten Schaumstoffscheiben angeordnet sein, oder können alternativ bei Draufsicht ebenfalls zwischen je zwei benachbarten Schaumstoffscheiben der jeweils anderen Wellen angeordnet sein. Jedenfalls ist die Einrichtung der Förderrollen so getroffen, daß zwischen den beiden Gruppen ein Förderweg für einen in den Einlaufschlitz 87 eingeführten Schichtträger vom Einlaufschlitz 87 zur Einlauföffnung 93 gegeben ist, wobei der Schichtträger aufgrund des Antriebs wenigstens einiger Förderrollen vom Einlaufschlitz 87 zur Einlauföffnung 93 und von dort in die Entwicklungsmaschine 80 transportiert wird. Wie Figur 3 zeigt, hat der Einlaufschlitz 87 eine wesentlich größere Breite als der Schichtträger 24.

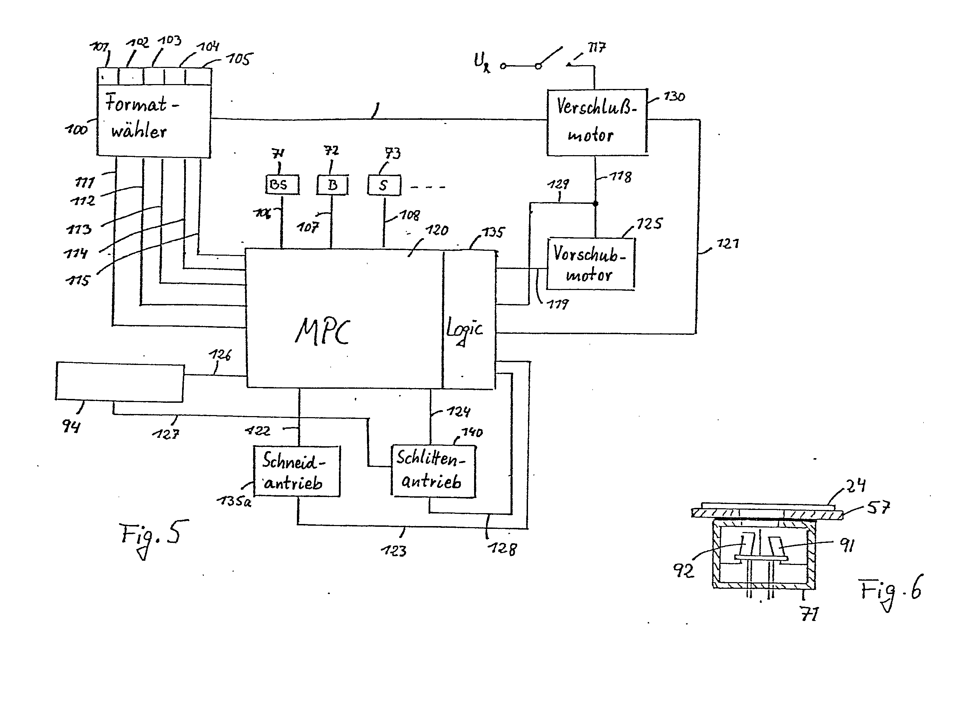

Um die durch die größere Maschinenbreite der Entwicklungsmaschine 80 gegebene Verarbeitungskapazität für den relativ schmalen Schichtträger 24 ausnutzen zu können ist zwischen der Schneidvorrichtung 40 und dem Einlaufschlitz 87 die Übergabevorrichtung 50 angeordnet. Zwischen zwei Seitenwangen 61, 62, die einen der Breite des Einlaufschlitzes 87 entsprechenden gleichen Abstand voneinander haben, sind zwei Schienen 51, 52 parallel zum Einlaufschlitz 87 und quer zur Vorschubrichtung des Schichtträgers 24 eingebaut. Auf den Schienen 51, 52 sitzt ein Schlitten 63 in Richtung der Pfeile c, d verschiebbar und ist dazu mit einem Kettentrieb 35 in noch zu beschreibender Weise gekoppelt. Im einzelnen besteht der Schlitten 63 aus einem zur Belichtungsbühne 22 und nach oben offenen Gehäuse 65, an dessen Bodenplatte 66 eine Kette 67 verankert ist. Die Schienen 51, 52 erstrecken sich durch Bohrungen in der Bodenplatte 66 hindurch. Am oberen Ende der Rückwand 68 ist eine Schwenkachse 58 vorgesehen, welche mit einer Schichtträger-Aufnahmeplatte 57 und einem Halter 69 drehfest verbunden ist. Die Schichtträgeraufnahmeplatte 57 ruht seitlich auf den nicht dargestellten Seitenwänden des Gehäuses 65 und deckt in der in Figur 6 dargestellten Lage das Gehäuse 56 nach oben ab. Die Schichtträger-Aufnahmeplatte 57 erstreckt sich an ihrem der Schwenkachse 58 gegenüberliegenden Ende bis nahe an die Schneidleiste 46. Der Halter 69 hat zwei beabstandete Gabeln 53, 54, an deren vorderem Ende eine Welle 55 drehbar gelagert ist. Auf der Welle 55 sitzen drehfest drei Schaumstoffscheiben 56 mit solchem Durchmesser, daß ihre Peripherie die Schichtträger-Aufnahmeplatte 57 nur leicht berührt.

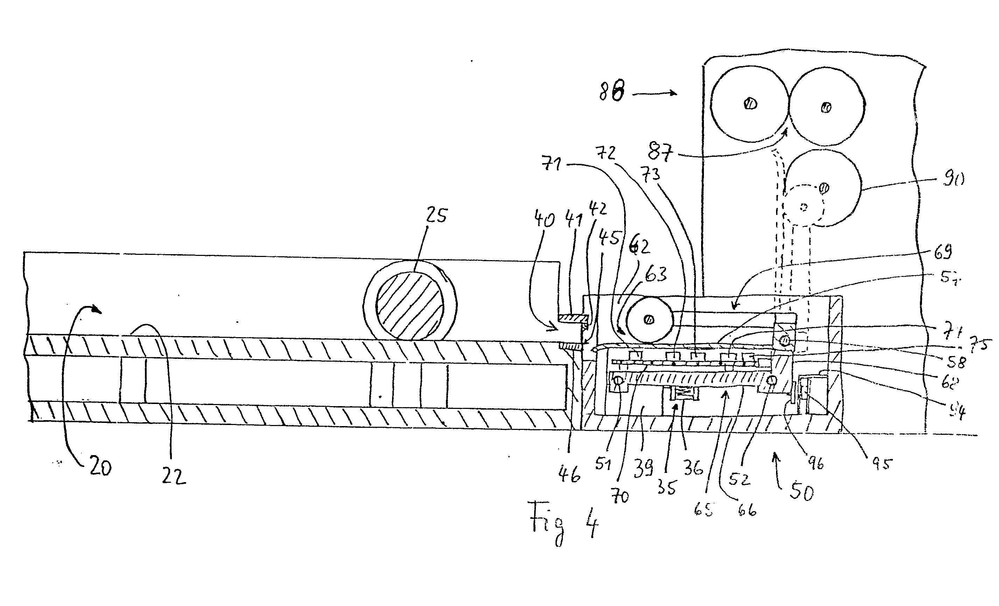

Die Schwenkachse 58 ist Abtriebswelle eines Hubantriebs 59, der am hinteren Ende des Gehäuses 65 befestigt ist. Bei Aktivierung des Hubantriebs 59 kann die Schichtträger-Aufnahmeplatte 57 mit Halter 69 aus der in Figuren 3 und 4 dargestellten unteren Endlage, in welcher die Oberfläche der Schichtträger-Aufnahmeplatte 57 mit der Oberfläche der Belichtungsbühne 22 fluchtet, in eine um etwa 90° nach oben verschwenkte, in Figur 4 gestrichelt dargestellte vertikale Endstellung verschwenkt werden. In dieser vertikalen Endstellung liegt die Schichtträger-Aufnahmeplatte 57 gegen angetriebene Förderscheiben 90 an, wobei die Schaumstoffrollen 56 des Halters 69 in die Zwischenräume zwischen die Förderscheiben 90 eindringen.

Die mit der Bodenplatte 66 verbundene Kette 37 des Kettentriebs 35 läuft über ein an der Seitenwange 61 der Übergabevorrichtung 50 innen drehbeweglich befestigtes Ritzel 38 um, und das untere Trum 36 der Kette 37 erstreckt sich um ein Antriebsritzel 38 eines Schlittenantriebsmotors 39 herum, der an der gegenüberliegenden Wange 62 der Übergabevorrichtung 50 befestigt ist. Das freie Ende des oberen Trums 34 der Kette 37 ist wieder an der Bodenplatte 66 verankert. Der Hubantrieb 59 und der Schlittenantriebsmotor 39 werden durch die noch zu erläuternde Steuerung derartig kooperierend aktiviert, daß der Schlitten 63 von der in Figur 3 dargestellten ersten Stellung, an der der Schlitten 63 zur Aufnahme des vorderen Endes des belichteten Schichtträgers 24 bereitsteht, sich seitlich in eine vorbestimmte Übergabestellung bewegt und die Schichtträger-Aufnahmeplatte 57 mit Halter 69 gleichzeitig aus der horizontalen Endlage in die vertikale Endlage und umgekehrt bewegt werden.

Das Gehäuse 65 beherbergt gemäß Figur 4 eine Platine 70, die sich parallel und unterhalb der Schichtträger-Aufnahmeplatte 57 erstreckt, wenn die Schichtträger-Aufnahmeplatte 57 sich in der horizontalen Endlage wie in Figur 4 dargestellt befindet. Mit der auf die Platine 70 aufgedruckten elektrischen Schaltung sind mehrere Infrarot-Sensoren 71, 72, 73, 74, 75 verbunden, wobei die Sensorfläche jedes Sensors unmittelbar unterhalb einer Öffnung 76, 77, 78, 79, 79' in der Schichtträger-Aufnahmeplatte 57 angeordnet ist.

Gemäß Figur 6 enthält der Sensor 71 einen Infrarot-Strahlungsgeber 91 und einen gegen direkte Einstrahlung geschützten Infrarot-Empfänger 92. Wird durch die Unterseite eines auf der Schichtträger-Aufnahmeplatte 57 liegenden Schichtträgers 24 ein Teil der vom Infrarot-Strahler 91 abgegebenen Strahlung auf den Infrarot-Empfänger 92 reflektiert, setzt dieser die veränderte Bestrahlungsstärke in ein elektrisches Signal um, das von der Steuerung in noch zu erläuternder Weise verarbeitet wird. Auf der Platine 70 können mehrere Sensoren 71... nebeneinander und/oder hintereinander an Positionen angeordnet sein, die sich aus dem gewählten Format des auf dem Schichtträger 24 in der Belichtungsstation 20 erzeugten (latenten) Bildes und der relativen Lage des Schlittens 63 zur Belichtungsstation 20 bestimmen. Die vom Infrarot-Empfänger 92 abgegebenen Signale werden von der Steuerung zur Aktivierung der Schneidvorrichtung 40, des Schlittenantriebsmotors 39, des Hubantriebs 59 und zur Freigabe eines neuen Belichtungsvorganges in der Belichtungsstation 20 in noch zu erläuternder Weise verarbeitet.

Die Steuerorgane für die Bewegung des Schlittens 63 sind in einem hinter dem Schlitten 63 angeordneten und sich über einen wesentlichen Teil der Breite der Übergabevorrichtung 50 zwischen deren Seitenwangen 61 und 62 erstreckenden Steuergehäuse 94 untergebracht. Sie bestehen im wesentlichen aus Sensoren, die in gleicher Weise arbeiten wie der Sensor 71 (und die Sensoren 72, 73, 74, 75) und von denen in Figur 4 ein Sensor 95 angedeutet ist. Die Sensoren sind im Steuergehäuse 94 horizontal in Abständen angeordnet, die sich nach den durch das gewählte Format bestimmten Haltepunkten des Schlittens 63 vor dem Einlaufschlitz 87 bestimmen. Gegenüber jedem Sensor hat das Steuergehäuse die eine Öffnung, vor der ein an der Rückwand 68 des Schlittens 63 befestigter Reflektorstreifen 96 bei seitlicher Bewegung des Schlittens 63 vorbeifahren kann. Die von den Infrarot-Empfängern der Sensoren im Steuergehäuse 94 erzeugten Signale werden von der Steuerung für die Aktivierung des Schlittenantriebsmotors 39 und des Hubantriebs 59 verarbeitet.

Die Arbeitsweise und das Betriebsverhalten der gesamten Vorrichtung erläutert das in Figur 5 wiedergegebene Schaltungsdiagramm der Steuerung. Ein in Griffnähe der Bedienungsperson auf der Arbeitsplatte 16 vorgesehener Formatwähler 100 besitzt im dargestellten Beispiel fünf Formatwählschalter 101...105, so daß durch Niederdrücken eines der Formatwählschalter eines der Formate, beispielsweise bei einer Rollenbreite von 9 cm die Formate 9 × 9, 9 × 12, 9 × 13, oder bei einer Rollenbreite von 10 cm die Formate 10 × 10, 10 × 15 oder dergleichen, für das auf dem Schichtträger 24 in der Belichtungsstation 20 zu erzeugende Bild gewählt werden kann.

Der Formatwähler 100 steuert entsprechend dem niedergedrückten Formatwählschalter die Einstellung des optischen Systems in der Belichtungsstation 20. Für jeden der Formatwählschalter 101...105 besitzt der Formatwähler 100 je eine Ausgangsleitung 111...115, die zu entsprechenden Eingängen eines Mikroprozessors 120 führen. Nach Betätigen eines der Formatwahlschalter gibt der Formatwähler 100 über eine Freigabeleitung 116 an den Verschlußmotor 130 des Verschlusses im optischen System ein Freigabesignal, so daß durch Niederdrücken des Auslöseschalters 117 der Verschlußmotor 130 ausgelöst werden kann. Nach Abschluß der Belichtung, das heißt nach Schließen des Verschlusses im optischen System gibt der Verschlußmotor 130 über eine Leitung 118 ein Signal an den Vorschubmotor 125 der Schichtträger-Vorschubeinrichtung 25, die gemäß Figuren 3 und 4 eine Antriebwalze für den bandförmigen Schichtträger 24 aufweist, so daß der Schichtträger 24 in Richtung auf den Schlitten 63 vorgeschoben wird. Während des Vorschubs gibt der Vorschubmotor 125 ein Signal über Leitung 119 an den Mikroprozessor 120 bzw. an eine mit dem Mikroprozessor 120 integrierte, im ganzen mit 135 bezeichnete Gatterschaltung. Der Mikroprozessor bestimmt aus dem über eine der Leitungen 111...115 empfangenen Formatsignal mittels eines Zählers den Haltezeitpunkt für den Vorschubmotor 125 und setzt diesen durch ein Stoppsignal über Leitung 119 still. Ferner speichert der Mikroprozessor 120 das Formatsignal und ermittelt aus diesem denjenigen der Sensoren 71...75, dessen Ausgangssignal auf den Leitungen 106, 107, 108... zur Betätigung der Elektromagnete 43, 44 der Schneidvorrichtung 40 verarbeitet werden kann. Da der Abstand der Sensoren 71...75 auf dem Schlitten 63 von der Belichtungsbühne 22 üblicherweise größer als eine Formatlänge ist, wird der Mikroprozessor 120 nach Erzeugen des ersten Bildes und Stillsetzen des Vorschubmotors 125 den Verschlußmotor 130 durch ein Signal über Leitung 121 zur Betätigung freigeben. Vor Drücken des Auslöseschalters 117 kann durch Niederdrücken eines anderen Formatschalters ein anderes Bildformat gewählt werden, und das über die zugehörige Ausgangsleitung 111...115 den Mikroprozessor zugeführte andere Formatsignal wird in diesem zur weiteren Verarbeitung abgespeichert.

Der erwähnte Zyklus wiederholt sich solange, bis die Vorderkante des vorgeschobenen Schichtträgers 24 den durch das erstgewählte Format erlaubten Sensor der Sensoren 71...75 zur Abgabe eines Ausgangssignals an den Mikroprozessor 120 veranlaßt. Dieser setzt daraufhin den Vorschubmotor 125 durch ein Stoppsignal auf Leitung 119 still und löst durch ein Signal auf Leitung 122 den Antrieb 135a der Schneidvorrichtung 40 aus. Das Schneidmesser 42 fährt daraufhin vor der Schneidkante 45 nieder und schneidet die Formatlänge entsprechend dem ersten Bild vom Schichtträger 24 ab. Der Abschluß des Schneidvorgangs wird über ein Signal auf Leitung 123 der Schaltungslogik 135 signalisiert, die daraufhin den Mikroprozessor 120 zur Abgabe eines Auslösesignals über Leitung 124 an den Schlittenantriebsmotor 39 und den Hubantrieb 59, die in Figur 5 als Schlittenantrieb 140 bezeichnet sind, veranlaßt. Inzwischen hat der Mikroprozessor 120 aus dem ersten Formatsignal diejenige Position bestimmt, an der der Schlitten 63 vor dem Einlaufschlitz 87 anhalten muß. Durch ein Signal über Leitung 126 wird der zugehörige Sensor im zugehörigen Steuergehäuse 94 aktiviert, so daß das durch Vorbeifahren des Reflektorstreifens 96 vor der zugehörigen Öffnung im Steuergehäuse 94 erzeugte Ausgangssignal über Leitung 127 den Schlittenantrieb 140 stillsetzt. Durch Andrücken des vom Schlitten 63 mitgenommenen Schichtträgerblattes gegen die angetriebene Förderrolle 90 nimmt diese das Schichtträgerblatt mit und führt es in den Einlaufschlitz 87 ein. Der Schlitten kehrt daraufhin (etwa nach Ablauf eines Zeitgliedes) in seine in Figur 3 dargestellte untere Endlage zurück. Die Einnahme dieser Endlage des Schlittens 63 wird von einem in dem Steuergehäuse 94 geeignet positionierten Sensor erfaßt und dem Mikroprozessor 120 durch ein Signal über Leitung 128 mitgeteilt. Der Mikroprozessor 120 setzt daraufhin über Leitung 129 den Vorschubmotor 125 in Gang und löscht das erste Formatsignal aus seinem Speicher. Der Mikroprozessor wartet daraufhin auf ein Signal aus einem der aufgrund des zweiten Formatsignals erlaubten Sensoren. Wird von dem Schichtträger 24 zunächst der Sensor 72 ausgelöst, erhält der Mikroprozessor 120 (beispielsweise für eine geeignete Impulsbreite) die Information, daß jetzt nicht geschnitten werden darf, sondern ein neues Bild auf dem Schichtträger in der Belichtungsstation 20 abgelichtet werden kann. Über Leitung 121 wird daraufhin der Verschlußmotor 130 freigegeben.

Aufgrund der Geometrie der Vorrichtung und des gewählten Formats kann auch der Fall eintreten, daß ein Signal aus einem der Sensoren, beispielsweise Sensor 71 dem Mikroprozessor anzeigt, daß sowohl geschnitten wie neu belichtet werden kann. In diesem Fall werden die Ausgangssignale auf Leitungen 124 und 121 gleichzeitig abgegeben, so daß während der Übergabe des Schichtträgerblattes durch den Schlitten in den Einlaufschlitz 87 gleichzeitig ein neues Bild erzeugt werden kann.

Die vorstehend beschriebene Steuerung mit dem Mikroprozessor, der Schnittstellen, Speicher, Zähler, Adressiereinrichtung und dgl. enthält, kann wesentlich vereinfacht und durch eine einfache Gatterlogik ersetzt werden kann, wenn bei Formatwechsel jeweils ein gewisser Vorlauf des Schichtträgers 24 bis zum Schlitten 63 in Kauf genommen wird. Die Sensoren 71...75 und die im Steuergehäuse enthaltenen Sensoren können dann unmittelbar von dem jeweiligen Formatsignal auf eine der Leitungen 111...115 gesteuert werden, wobei die Ausgangssignale der dann jeweils formatabhängig aktivierten Sensoren den Vorschubmotor 125, den Verschlußmotor 130 und den Schlittenantrieb 140 unmittelbar steuern.

Es versteht sich ferner, daß störungsmeldende Sicherungseinrichtungen vorgesehen sein können, die beispielsweise den weiteren Betrieb der Vorrichtung unterbrechen, wenn ein Schichtträgerblatt nicht funktionsgemäß von der Übergabevorrichtung 50 in den Einlaufschlitz 87 übergeben worden ist.

Mit der erfindungsgemäßen Vorrichtung können daher die Schichtträgerabschnitte wesentlich schneller belichtet werden als der Durchlaufgeschwindigkeit eines Schichtträgers durch die Entwicklungsmaschine 80 entspricht. Durch das Durchlaufen der seitlich versetzt in den Einlaufschlitz 87 eingeführten Schichtträger durch die Entwicklungsmaschine 80 wird deren Entwicklungskapazität wesentlich besser als bisher ausgenutzt, so daß die Zahl der pro Zeiteinheit entwickelbaren Schichtträger wesentlich erhöht werden kann. Ferner ist es mit der erfindungsgemäßen Vorrichtung ohne weiteres möglich, zwischen eine Serie abzulichtender Negative ein oder mehrere Negative zwischenzuschalten, ohne daß sich dadurch eine Verzögerung in der Entwicklung und Fertigstellung der separat in die Serie eingeschobenen Bilder ergibt.

**Patentansprüche**

1. Vorrichtung zum Überführen fotografischer, blattförmiger Schichtträger (24) aus einer Belichtungsbühne (22) in den Einlaufschlitz (87) einer Entwicklungsmaschine (80) mittels eines längs des Einlaufschlitzes bewegbaren Schlittens (63), wobei eine Vorschubeinrichtung (25) die zusammenhängenden Schichtträger aus der Belichtungsbühne (22) über eine Schneidvorrichtung (40), in welcher jeder der Schichtträger von den zusammenhängenden nachfolgenden Schichtträgern abgeschnitten wird, dem Schlitten zuführt, und wobei sich der Einlaufschlitz (87) quer zur Vorschubrichtung erstreckt und breiter ist als ein Schichtträger (24), dadurch gekennzeichnet, daß die Bewegung des Schlittens (63) in Abhängigkeit von der jeweiligen Breite des Schichtträgers (24) zu einer beliebigen Position vor den Einlaufschlitz (87) erfolgt.

2. Vorrichtung nach Anspruch 1, dadurch gekennzeichnet, daß eine Steuerung (120) mehrere Formatwählschalter (101...105) aufweist, welche den Schlittenantriebsmotor (29, 140) entsprechend dem betätigten Formatwählschalter steuert.

3. Vorrichtung nach Anspruch 1 oder 2, dadurch gekennzeichnet, daß das von einem betätigten Formatwählschalter (101...105) erzeugte Formatsignal in der Steuerung (120) zwischengespeichert ist.

4. Vorrichtung nach Anspruch 2 oder 3, dadurch gekennzeichnet, daß am Schlitten (63) Sensoren (71...75) vorgesehen sind, die der Steuerung (120) das Vorhandensein des Schichtträgers (24) mit dem gewählten Format auf dem Schlitten (63) signalisieren.

5. Vorrichtung nach einem der Ansprüche 2-4, dadurch gekennzeichnet, daß längs der Bahn des Schlittens (63) weitere Sensoren (95) mit Abstand angeordnet sind, welche zum Anhalten des Schlittens (63) an der durch die Breite des Schichtträgers (24) bestimmten Position von der Steuerung (120) aktivierbar sind.

6. Vorrichtung nach einem der vorstehenden Ansprüche, dadurch gekennzeichnet, daß der Schlitten (63) eine verschwenkbare Schichtträger-Aufnahmeplatte (57) aufweist.

7. Vorrichtung nach Anspruch 6, dadurch gekennzeichnet, daß die Schwenkachse (58) der Schichtträger-Aufnahmeplatte (57) sich parallel zum Einlaufschlitz (87) erstreckt.

8. Vorrichtung nach einem der vorstehenden Ansprüche, dadurch gekennzeichnet, daß der Einlaufschlitz (87) über der Schwenkachse (58) angeordnet ist.

9. Vorrichtung nach einem der Ansprüche 6-8, dadurch gekennzeichnet, daß vor dem Einlaufschlitz (87) wenigstens eine angetriebene Förderscheibe (90) angeordnet ist, gegen deren Peripherie die Schichtträger-Aufnahmeplatte (57) des Schlittens (63) in einer ihrer Endstellungen anliegt.

10. Vorrichtung nach einem der Ansprüche 6-9, dadurch gekennzeichnet, daß der Schlitten wenigstens einen die Schichtträger-Aufnahmeplatte (57) leicht kontaktierenden Halter (53, 54, 55, 56) aufweist.

11. Vorrichtung nach Anspruch 10, dadurch gekennzeichnet, daß der Halter mit der Schichtträger-Aufnahmeplatte (57) gemeinsam verschwenkbar ist.

12. Vorrichtung nach einem der Ansprüche 6-11, dadurch gekennzeichnet, daß die Sensoren (71...75) unter Öffnungen in der Schichtträger-Aufnahmeplatte (57) angeordnet sind, deren Ausgangssignale den Schlittenantrieb (140), sowie den Vorschubmotor (125) der Vorschubeinrichtung (25) steuern.

13. Vorrichtung nach einem der Ansprüche 6-12, dadurch gekennzeichnet, daß die Schneidvorrichtung (40) vor der Vorderkante der Schichtträger-Aufnahmeplatte (57) angeordnet ist.

14. Vorrichtung nach einem der Ansprüche 2 bis 13, dadurch gekennzeichnet, daß die Steuerung einen Mikroprozessor (120) aufweist.

**Claims**

1. An apparatus for transferring photographic layer carriers (24) in the form of a sheet from an exposition platform (22) into the inlet slit (87) of a development machine (80) by means of a carrier (63) movable along the inlet slit, wherein a feeding device (25) supplies interconnected layer carriers from the exposition platform (22) to the carriage via a cutting device (40), in which each of the layer carriers is cut off from the following layer carrier connected thereto, and wherein the inlet slit (87) extends transversely to the feeding device and is wider than a layer carrier (24), characterised in that the movement of the carriage (63) takes place in dependence on the respective width of the layer carrier (24) to a desired position upstream of the inlet slit (87).

2. An apparatus according to Claim 1 characterised in that a control means (120) has several size-selection switches (101...105), which control the carriage-driving motor (29, 140) according to the actuated size-selection switch.

3. An apparatus according to Claim 1 or 2, characterised in that size signal, provided by an actuated size-selection switch (101...105) is temporarily stored in the control (120).

4. An apparatus according to Claim 2 or 3 characterised in that sensors (71...75) are provided on the carriage (63) which signal to the control (120) the presence of the layer carrier (24) of the selected size on the carriage (63).

5. An apparatus according to any one of Claims 2 to 4 characterised in that further sensors (95) are arranged, spaced apart, along the path of the carriage (63) and the sensors can be actuated by the control (120) to stop the carriage (63) at a position determined by the width of the layer carrier (34).

6. An apparatus according to any one of the preceding claims characterised in that the carriage (63) has a swivellable plate (57) for receiving the layer carriers.

7. An apparatus according to Claim 6 characterised in that the axis (58) of swivelling of the plate (57) for receiving the layer carrier extends parallel to the inlet slit (87).

8. An apparatus according to any one of the preceding claims characterised in that the inlet slit (87) is arranged above the swivelling axis (58).

9. An apparatus according to any one of Claims 6 to 8 characterised in that at least one driven transport pulley (90) is arranged upstream of the inlet slit (87) on to the periphery of which bears the plate (57) for receiving the layer carrier of the carriage (63) in one of its end positions.

10. An apparatus according to any one of Claims 6 to 9 characterised in that the carriage has at least one holder (53, 54, 55, 56) which lightly contacts the plate (57) for receiving the layer carriers.

11. An apparatus according to Claim 10 characterised in that the holder can swivel together with the plate (57) for receiving the layer carrier.

12. An apparatus according to any one of Claims 6 to 11 characterised in that the sensors (71...75) are arranged below the openings in the plate (57) for receiving the layer carriers, the output signals of the signals controlling the carrier drive (140) and the feeder motor (125) of the feeding device (25).

13. An apparatus according to any one of Claims 6 to 12 characterised in that the cutting device (40) is arranged upstream of the front edge of the plate (57) for receiving the layer carriers.

14. An apparatus according to any one of Claims 2 to 13 characterised in that the control includes a microprocessor (120).

## Revendications

1. Dispositif permettant de transférer des bases d'émulsion photographiques en forme de feuilles (24) depuis un plan d'exposition (22) vers la fente d'introduction (87) d'une machine à développer (80) au moyen d'un chariot (63) se déplaçant le long de la fente d'introduction, pour lequel un dispositif d'avance (25) amène au chariot les bases d'émulsion attachées les unes aux autres provenant du plan d'exposition (22) en passant par un dispositif de coupe (40) dans lequel chacune des bases d'émulsion est séparée des suivantes attachées les unes aux autres, et pour lequel la fente d'introduction (87) s'étend transversalement au sens d'avance et est plus large qu'une base d'émulsion (24), caractérisé en ce que le déplacement du chariot (63) s'effectue en fonction de la largeur de chaque base d'émulsion (24) jusqu'à une position quelconque devant la fente d'introduction (87).

2. Dispositif conforme à la revendication 1, caractérisé en ce qu'une commande (120) présente plusieurs commutateurs sélectifs de format (101...105) et qu'elle commande le moteur d'entraînement du chariot (29, 140) en fonction du commutateur sélectif de format actionné.

3. Dispositif conforme à la revendication 1 ou 2, caractérisé en ce que le signal de format produit par un commutateur sélectif de format actionné (101...105) est mémorisé temporairement dans la commande (120).

4. Dispositif conforme à la revendication 2 ou 3, caractérisé en ce que, sur le chariot (63), sont prévus des capteurs (71...75) qui signalent à la commande (120) la présence sur le chariot (63) d'une base d'émulsion (24) présentant le format choisi.

5. Dispositif conforme à l'une des revendications 2 à 4, caractérisé en ce que, le long de la voie du chariot (63), sont placés des capteurs (95) espacés les uns des autres qui peuvent être actionnés par la commande (120) pour arrêter le chariot (63) à la position définie par la largeur de la base d'émulsion (24).

6. Dispositif conforme à l'une quelconque des revendications précédentes, caractérisé en ce que le chariot (63) possède une plaque pivotante réceptrice des bases d'émulsion (57).

7. Dispositif conforme à la revendication 6, caractérisé en ce que l'axe de pivotement (58) de la plaque réceptrice des bases d'émulsion (57) s'étend parallèlement à la fente d'introduction (87).

8. Dispositif conforme à l'une quelconque des revendications précédentes, caractérisé en ce que la fente d'introduction (87) est placée au-dessus de l'axe de pivotement (58).

9. Dispositif conforme à l'une des revendications 6 à 8, caractérisé en ce que, devant la fente d'introduction (87), est prévu au moins un disque d'alimentation entraîné (90), contre la périphérie duquel repose la plaque réceptrice (57) du chariot (63) dans l'une de ses positions extrêmes.

10. Dispositif conforme à l'une des revendications 6 à 9, caractérisé en ce que le chariot possède au moins un appui (53, 54, 55, 56) assurant un léger contact avec la plaque réceptrice des bases d'émulsion (57).

11. Dispositif conforme à la revendication 10, caractérisé en ce que l'appui peut pivoter avec la plaque réceptrice des bases d'émulsion (57).

12. Dispositif conforme à l'une des revendications 6 à 11, caractérisé en ce que les capteurs (71...75) sont placés sous des ouvertures pratiquées dans la plaque réceptrice (57), dont les signaux de sortie commandent l'entraînement du chariot (140) ainsi que le moteur d'avance (125) du dispositif d'avance (25).

13. Dispositif conforme à l'une des revendications 6 à 12, caractérisé en ce que le dispositif de coupe (40) est placé devant l'arête avant de la plaque réceptrice des bases d'émulsion (57).

14. Dispositif conforme à l'une des revendications 2 à 13, caractérisé en ce que la commande est munie d'un microprocesseur (120).

8

80

12

11

10

9

7

8

Fig.: 1

Fig. 2

Fig. 3

0 075 300

Fig 4

0 075 300

Fig.5

Fig.6

0 075 300